# EUROPÄISCHE PATENTANMELDUNG

(11) **EP 0 760 269 A1**
(43) Veröffentlichungstag der Anmeldung: **05.03.1997**
(21) Anmeldenummer: 96113376.6
(22) Anmeldetag: 21.08.1996
(51) Int. Cl.: B23D 79/02, B23B 27/12

(54) **Vorrichtung zum Innenentgraten längsnahtgeschweisster Rohre oder Profile**

(30) Priorität: 28.08.1995 DE 19532835
(71) Anmelder: Graefe, Michael, Dr.-Ing., 41068 Mönchengladbach (DE)
(72) Erfinder: Graefe, Michael, Dr.-Ing., 41068 Mönchengladbach (DE)
(74) Vertreter: Bonsmann, Manfred, Dipl.-Ing.

(57) **Zusammenfassung**

Bei einer Vorrichtung zum Innenentgraten von in einer Rohrschweißanlage längsnahtgeschweißten Rohren oder Profilen ist ein im Inneren des Rohres oder Profils an Führungsrollen geführter Werkzeugträger vorgesehen, an dem ein Schneidring um seine zur Längsachse des Rohres unter einem spitzen Winkel geneigte Zentralachse weiterdrehbar in einer Schneidringaufnahme festklemmbar angeordnet ist. Der Schneidring (5) ist aus dem Schnitt nehmbar, wobei mit der Zurückbewegung des Schneidringes (5) ein Lösen der Klemmung und ein Weiterdrehen des Scheidringes um einen festgelegten Winkelbetrag auslösbar ist. Die Ansteuerung erfolgt über wenigstens eine über den Schweißpunkt des Rohres oder Profils in der Rohrschweißanlage nach außen geführte hydraulische oder elektrische Leitung.

## Beschreibung

Die Erfindung betrifft eine Vorrichtung zum Innenentgraten von in einer Rohrschweißanlage längsnahtgeschweißten Rohren oder Profilen, mit einem im Inneren des Rohres oder Profils an Führungsrollen geführten Werkzeugträger, an dem ein Schneidring um seine zur Längsachse des Rohres unter einem spitzen Winkel geneigte Zentralachse drehbar in einer Schneidringaufnahme festklemmbar angeordnet ist.

Eine derartige Vorrichtung ist beispielsweise aus der DE 33 47 146 C 1 bekannt. Derartige Vorrichtungen dienen zum Entfernen des inneren Schweißwulstes bei längsnahtgeschweißten Rohren, der durch im Schweißpunkt vorhandenen Druck auf die Bandkanten sowohl an der Innen- wie auch der Außenseite des Rohres durch das ausgestauchte fast flüssige Material entsteht. Dieser Schweißwulst wird hinter dem Schweißpunkt auf der Innen- und Außenseite des Rohres durch Entgratwerkzeuge abgeschabt, wobei die Außenentgratung in der Regel keine Schwierigkeiten bereitet, weil der äußere Schweißwulst leicht zugänglich ist.

Das Entfernen des inneren Schweißwulstes hingegen bedarf besonderer Maßnahmen. Dabei kommt den Schneidwerkzeugen eine besondere Bedeutung zu, weil sie sehr hohen Belastungen unterliegen und dementsprechend schnell verschleißen. Man hat auch schon vorgeschlagen, beim Entfernen des inneren Schweißwulstes durch eine Schnittkraftkomponente einen Scheibenmeißel ständig zu drehen (DE-OS 21 03 400). Trotz der verbesserten Standleistung wird mit dieser Vorrichtung aber nur eine schlechte Schnittqualität erzielt.

Zum Innenentgraten ist es weiterhin bekannt, Schneidringe aus Hartmetall einzusetzen, die nacheinander an mehreren Stellen ihres Umfanges benutzt werden. Der Schneidring wird dazu um seine Zentralachse verdrehbar in der Schneidringaufnahme festgeklemmt, wobei zum Klemmen eine tangential den Schneidring haltende Schraube verwendet wird. Zum Verdrehen des Schneidringes wird die Rohrschweißanlage angehalten, in dem geschweißten Rohr eine Öffnung geschaffen, durch diese Öffnung die Klemmung gelöst und dann der Schneidring von Hand weitergedreht. Dies führt zu langen Stillstandszeiten und damit hohen Kosten. Der Rohrabschnitt mit der Öffnung muß verschrottet werden.

Aus der JP-Appl. No. 63-282 349 ist der Vorschlag bekannt, den Werkzeugträger und den daran angebrachten Schneidring von außerhalb des Rohres über Stangen zu betätigen, wobei für verschiedene Funktionen (z.B. Verstellung der Spantiefe, Verstellung der Anpreßkraft, Weiterdrehung des Schneidringes) jeweils gesonderte Stangen vorgesehen sind, welche zum Teil drehbar und zum Teil hin- und herbewegbar angeordnet sind. Die Betätigung dieser Stangen bringt erhebliche Probleme mit sich, da sich die Stangen und die sie drehenden Kegelradgetriebe bzw. die daran hängenden Hebel mit dem im Rohr zur Verfügung stehenden Platz auskommen müssen. Da im Bereich des Schweißpunktes der Querschnitt des entstehenden Rohres üblicherweise weitgehend von einem Impeder mit Ferritstäben ausgefüllt ist, ist es besonders schwierig, die Stangen durch diesen Bereich hindurch zu führen. Aus diesen Gründen hat es sich als nicht praktikabel erwiesen, den Werkzeugträger und den daran angebrachten Schneidring von außerhalb des Rohres mechanisch über einzelne Stangen zu betätigen.

Die der Erfindung zugrundeliegende Aufgabe besteht darin, eine von außerhalb des Rohres betätigbare Vorrichtung der eingangs genannten Art zu schaffen, welche von einfachem Aufbau ist, betriebssicher arbeitet, mit geringen Stillstandszeiten auskommt und im Bereich des Schweißpunktes möglichst wenig Querschnittsfläche beansprucht.

Diese Aufgabe wird dadurch gelöst, daß der Schneidring über wenigstens eine über den Schweißpunkt des Rohres oder Profils nach außen geführte hydraulische oder elektrische Leitung angesteuert aus dem Schnitt nehmbar ist und gleichzeitig ein Lösen der Klemmung des Schneidringes und eine Verdrehung des Schneidringes um einen festgelegten Winkelbetrag erfolgt, derart, daß zwangsweise bei dem folgenden Schnitt ein dem vorhergehenden Schneidringsektor benachbarter Schneidringsektor zum Einsatz kommt.

Da bekanntlich die verwendeten Bänder nicht endlos sind, sondern durch Zusammenschweißen endlicher Bandlängen quasi endlos gemacht werden, passieren regelmäßig Bandquernähte den Innenentgrater. Um den Schneidring des Innenentgraters nicht zu beschädigen, wird dieser nach dem Vorschlag der Erfindung beim Passieren der Quernaht (wie bekannt) aus dem Schnitt genommen, wobei aber gleichzeitig mit der Zurückbewegung des Schneidringes ein Lösen der Klemmung und eine Weiterdrehung des Schneidringes um einen festgelegten Winkelbetrag ausgelöst wird. Die Stillstandszeiten der Rohrschweißanlage verkürzen sich deutlich durch die automatische Weiterdrehung des Schneidringes immer dann, wenn der Schneidring zum Passieren einer Quernaht ohnehin aus dem Schnitt genommen wird. Gleiches geschieht bei einem Anlagenhalt: Auch dann wird mit dem Zurückziehen des Schneidringes dieser gleichzeitig um einen festgelegten Winkelbetrag weitergedreht. Besonders vorteilhaft ist, daß der Querschnittsbedarf für hydraulische oder elektrische Leitungen wesentlich geringer als für Betätigungsstangen ist. Ein weiterer Vorteil besteht darin, daß elektrische oder hydraulische Leitungen problemlos nach außen geführt werden können.

In einer günstigen Ausgestaltung der Erfindung ist vorgesehen, daß der Schneidring koaxial von einem außenverzahnten Zahnring umgeben und mittels eines Klemmkolbens im Werkzeugträger festklemmbar ist und mittels eines in die Verzahnung des Zahnringes eingreifenden Vorschubkolbens um den festgelegten Winkelbetrag weiterdrehbar ist. Auf diese Weise kann druckmittelbetrieben und von außen steuerbar durch Lösen des Klemmkolbens die Klemmung des Schneidringes aufgehoben werden und gleichzeitig mit einem Vorschubkolben, der in den Zahnring eingreift, dieser zusammen mit dem Schneidring schrittweise weitergedreht werden.

Um zu verhindern, daß der durch den Vorschubkolben weitergedrehte Schneidring sich in entgegengesetzter Richtung zurückdreht, wenn der Vorschubkolben in seine Ausgangsstellung zurückgeführt wird, ist nach einem weiteren Merkmal der Erfindung vorgesehen, die Drehbewegung des Schneidringes durch eine in den Zahnring eingreifende Sperrklinke in einer Richtung zu sperren.

Dabei können der Klemmkolben und der Vorschubkolben einseitig beaufschlagbar sein, während für die Rückzugsbewegung des Klemmkolbens sowie die Vorschubbewegung des Vorschubkolbens Federn vorgesehen sind, die die gewünschten Bewegungen herbeiführen. Es ist vorgesehen, daß die Druckmittelleitungen des Klemmkolbens und des Vorschubkolbens miteinander verbunden an eine gemeinsame Druckmittelquelle angeschlossen sind. Durch entsprechende Schaltung von Klemmkolben und Vorschubkolben können deren Bewegungen durch Zu- und Abschalten der gemeinsamen Druckmittelleitung gemeinsam gesteuert werden, so daß mit dem Zurückbewegen des Klemmkolbens ein Lösen des Schneidringes und gleichzeitiges Ausfahren des Vorschubkolbens zum Drehen des Schneidringes ausführbar sind.

In einer Alternative ist es aber auch denkbar, den Klemmkolben und den Vorschubkolben beidseitig beaufschlagbar auszuführen (z. B. Rückhub mit Kühlemulsion unter etwa 10 bar).

Als Druckmittel kann ein hydraulisches Medium verwendet werden, vorzugsweise das ohnehin in der Rohrschweißanlage benutzte Emulsionskonzentrat. Kleinere Leckagen würden in diesem Fall nicht stören.

In einer Weiterbildung ist vorgesehen, daß mindestens die für die Federn und den Zahnring vorgesehenen Hohlräume im Werkzeugträger mit Kühlemulsion geflutet sind. Hierdurch wird sichergestellt, daß in die Hohlräume keine Zunderpartikel eindringen, was die mechanische Funktion der Kolben und/Federn hemmen könnte.

Ein Ausführungsbeispiel der Erfindung ist in der Zeichnung dargestellt und wird nachfolgend beschrieben. Es zeigt:
Fig. 1 den Werkzeugträger einer Vorrichtung zum Innenentgraten im Längsschnitt und
Fig. 2 den Werkzeugträger nach Fig. 1 in um 90 Grad gedrehtem Längsschnitt

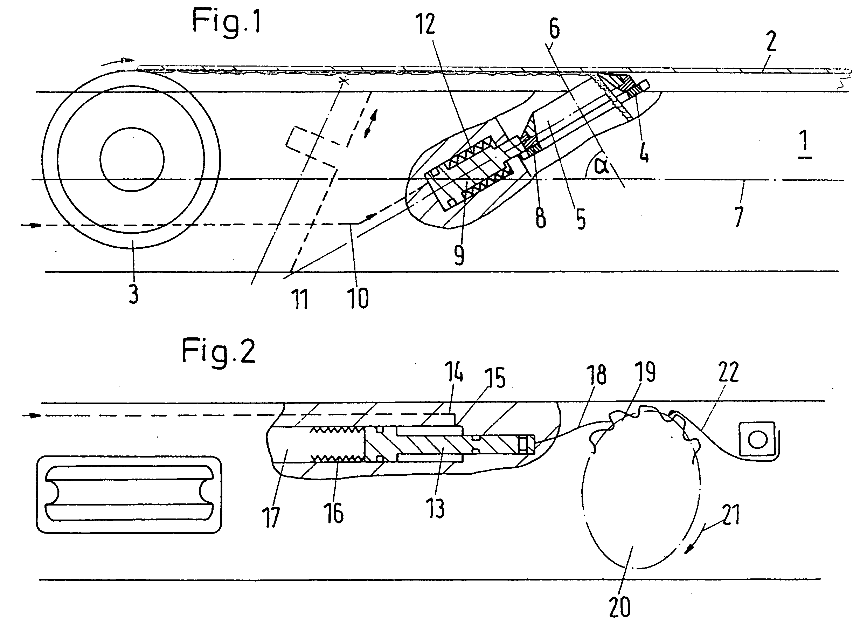

In Fig. 1 ist mit 1 der Werkzeugträger einer Vorrichtung zum Innenentgraten längsnahtgeschweißter Rohre und Profile bezeichnet, der mit einer Führungsrolle 3 an der Innenwand 2 eines längsnahtgeschweißten Rohres geführt ist. Der Werkzeugträger 1 nimmt in einer Schneidringaufnahme 4 einen Schneidring 5 auf, dessen Zentralachse 6 unter einem spitzen Winkel α zur Längsachse 7 des Rohres geneigt ist. Koaxial zur Zentralachse 6 des Schneidringes 5 ist ein außenverzahnter Zahnring 8 mit einer Schneidringaufnahme 4 verbunden, dessen Funktion später noch beschrieben wird. Wie in der oberen Zeichnungshälfte dargestellt, erfolgt die Klemmung des Schneidringes 5 in der Schneidringaufnahme 6 mittels eines Klemmkolbens 9, dessen Druckmittelraum - über die Druckmittelleitung 10 mit Druckmittel beaufschlagt - ein Ausfahren des Klemmkolbens 9 in Richtung Schneidringaufnahme 4 bewirkt. Zur Zurückbewegung des Klemmkolbens 9 ist koaxial zu dessen Achse 11 eine Feder 12 vorgesehen, deren Wirkrichtung gegen die Kolbenfläche des Klemmkolbens 9 gerichtet ist.

Wie in der unteren Zeichnungshälfte erkennbar, ist eine weitere Kolbenzylindereinheit als Vorschubkolben 13 im Werkzeugträger 1 angeordnet. Der Vorschubkolben 13 ist über die Druckmittelleitung 14 bei 15 einseitig mit Druckmittel beaufschlagbar, so daß der Vorschubkolben 13 gegen die Wirkung der Feder 16 in seinem Kolbenraum (in der Zeichnung nach links) bewegt wird, wenn die Druckmittelleitung 14 mit Druckmittel beaufschlagt wird. Der Vorschubkolben 13 wird durch das Druckmittel in eine Ausgangsendlage gefahren und dort gehalten.

Am freien, aus dem Zylinderraum 17 des Vorschubkolbens 13 herausragenden Ende ist am Vorschubkolben 13 eine Blattfeder 18 befestigt, die mit ihrem freien stirnseitigen Ende in die Zähne 19 des Zahnringes 20 eingreift, sobald die Druckmittelleitung 14 zum Kolbenraum des Vorschubkolbens 13 entlastet wird. Dann nämlich bewirkt die Feder 16 eine Bewegung des Vorschubkolbens 13 (in der Zeichnungsebene nach rechts), wodurch sich die Stirnseite der Blattfeder in den Zahn 19 des Zahnringes 20 preßt und bei Weiterbewegung des Vorschubkolbens 13 ein Verdrehen des Zahnringes 20 in Pfeilrichtung 21 bewirkt.

Bei 22 ist eine Sperrklinke schematisch dargestellt, die zwischen zwei Zähnen 19 des Zahnringes 20 eingreifend, ein Zurückdrehen des Zahnringes 20 verhindert, wenn durch Beaufschlagen des Vorschubkolbens über die Druckmittelleitung 14 der Vorschubkolben 13 zusammen mit der Blattfeder 18 zurückbewegt wird.

Bei miteinander verbundenen Druckmittelleitungen 10 und 14 bewirkt ein Entlasten der Versorgungsleitungen vom Druckmedium eine Lösung der Klemmwirkung des Klemmkolbens 9 und dessen Zurückbewegen mittels der Feder 12 und gleichzeitig eine Bewegung des Vorschubkolbens 13 mit der Blattfeder 18 in Richtung Zahnring 20 mittels der Feder 16. Ein Beaufschlagen der Druckmittelleitungen mit Druckmittel klemmt einerseits mit Hilfe des Klemmkolbens 9 den Schneidring 5 in seiner Arbeitsposition fest und beendet durch Zurückfahren des Vorschubkolbens 13 die Drehbewegung des Zahnringes 20.

Die Hohlräume um bzw. neben den Klemm- und Vorschubkolben 9, 13 sowie der Hohlraum, in dem der Zahnring 20 angeordnet ist, können mit der Emulsion gefüllt sein, die zur Kühlung und Schmierung des Schneidringes 5 im Inneren des Rohres ohnehin vorhanden ist.

Die Erfindung gestattet ein automatisches Weiterdrehen des Schneidringes 5 bei jedem Passieren einer Quernaht oder bei einem Anlagenhalt gleichzeitig mit dem Absenken des Schneidringes 5, so daß mit sehr einfachen Mitteln eine funktionssichere Vorrichtung zum Innenentgraten längsnahtgeschweißter Rohre und Profile geschaffen wird.

## Patentansprüche

1. Vorrichtung zum Innenentgraten von in einer Rohrschweißanlage längsnahtgeschweißten Rohren oder Profilen, mit einem im Inneren des Rohres oder Profils an Führungsrollen geführten Werkzeugträger, an dem ein Schneidring um seine zur Längsachse des Rohres unter einem spitzen Winkel geneigte Zentralachse verdrehbar in einer Schneidringaufnahme festklemmbar angeordnet ist, dadurch gekennzeichnet, daß der Schneidring (5) über wenigstens eine über den Schweißpunkt des Rohres oder Profils nach außen geführte hydraulische oder elektrische Leitung angesteuert aus dem Schnitt nehmbar ist und gleichzeitig ein Lösen der Klemmung des Schneidringes (5) und eine Weiterdrehung des Schneidringes (5) um einen festgelegten Winkelbetrag erfolgt, derart, daß zwangsweise bei dem folgenden Schnitt ein den vorhergehenden Schneidringsektor benachbarter Schneidringsektor zum Einsatz kommt.

2. Vorrichtung nach Anspruch 1, dadurch gekennzeichnet, daß der Schneidring (5) koaxial von einem außenverzahnten Zahnring (8) umgeben und mittels eines Klemmkolbens (9) im Werkzeugträger festklemmbar ist und mittels eines in die Verzahnung des Zahnringes (8) eingreifenden Vorschubkolbens (13) um den festgelegten Winkelbetrag weiterdrehbar ist.

3. Vorrichtung nach Anspruch 2, dadurch gekennzeichnet, daß der Klemmkolben (9) und der Vorschubkolben (13) einseitig beaufschlagbar sind, und für die Rückzugsbewegung des Klemmkolbens (9) sowie die Vorschubbewegung des Vorschubkolbens (13) Federn (12, 16) vorgesehen sind und die Druckmittelleitungen (10, 14) des Klemmkolbens (9) und des Vorschubkolbens (13) miteinander verbunden an eine gemeinsame Druckmittelquelle angeschlossen sind.

4. Vorrichtung nach Anspruch 2, dadurch gekennzeichnet, daß der Klemmkolben (9) und der Vorschubkolben (13) beidseitig beaufschlagbar sind.

5. Vorrichtung nach einem der Ansprüche 1 bis 4, dadurch gekennzeichnet, daß die Drehbewegung des Schneidringes (5) durch eine in den Zahnring (8) eingreifende Sperrklinke (22) in einer Richtung gesperrt ist.

6. Vorrichtung nach Anspruch 5, dadurch gekennzeichnet, daß als Druckmittel ein hydraulisches Medium (z.B. Hydrauliköl, Kühlemulsion, Emulsionskonzentrat oder Fett) verwendet wird.

7. Vorrichtung nach einem der Ansprüche 1 bis 6, dadurch gekennzeichnet, daß alle Hohlräume für bewegliche Teile des Werkzeugträgers (1) während des Betriebes zur Vermeidung von Störungen durch Zunder mit Emulsion geflutet sind.

8. Vorrichtung nach einem der Ansprüche 2 bis 7, dadurch gekennzeichnet, daß der Zahnring als Schneckenrad ausgebildet und über eine Schneckenwelle von einem im Werkzeugträger angeordneten Motor (Hydromotor oder Elektromotor) angetrieben ist.
